(19) **Europäisches Patentamt**
**European Patent Office**
**Office européen des brevets**

(11) **EP 1 727 725 B1**

(12) **EUROPÄISCHE PATENTSCHRIFT**

(45) Veröffentlichungstag und Bekanntmachung des Hinweises auf die Patenterteilung:
**15.09.2010 Patentblatt 2010/37**

(21) Anmeldenummer: **05729540.4**

(22) Anmeldetag: **23.03.2005**

(51) Int Cl.:
*B62D 6/00* (2006.01)      *B62D 6/10* (2006.01)
*G01L 5/22* (2006.01)

(86) Internationale Anmeldenummer:
**PCT/EP2005/051338**

(87) Internationale Veröffentlichungsnummer:
**WO 2005/092690 (06.10.2005 Gazette 2005/40)**

(54) **REIFENSEITENKRAFTBESTIMMUNG IN ELEKTRISCHEN LENKSYSTEMEN**

TYRE LATERAL FORCE DETERMINATION IN ELECTRICAL STEERING SYSTEMS

DETERMINATION DE LA FORCE LATERALE APPLIQUEE SUR LES PNEUS DANS DES DIRECTIONS ELECTRIQUES

(84) Benannte Vertragsstaaten:
**DE FR**

(30) Priorität: **23.03.2004 DE 102004014177**

(43) Veröffentlichungstag der Anmeldung:
**06.12.2006 Patentblatt 2006/49**

(73) Patentinhaber: **Continental Teves AG & Co. oHG 60488 Frankfurt am Main (DE)**

(72) Erfinder:
• **BERTHOLD, Thomas 64293 Darmstadt (DE)**
• **SCHWARZ, Ralf 69118 Heidelberg (DE)**
• **FRITZ, Stefan 64390 Erzhausen (DE)**

(56) Entgegenhaltungen:
**DE-A1- 10 216 247      DE-A1- 10 332 023 DE-A1- 19 912 169**

EP 1 727 725 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

**Gebiet der Erfindung**

Die Erfindung betrifft ein Verfahren zur Bestimmung der Reifenseitenkraft in einem Kraftfahrzeug mit einem elektromechanischen oder elektrohydraulischen Lenksystem.

**Hintergrund der Erfindung**

Viele moderne Kraftfahrzeuge sind neben den schon sehr weit verbreiteten ABS-Bremssystemen immer häufiger auch mit Fahrdynamikregelsystemen ausgerüstet, um die aktive Sicherheit von Fahrzeugen zu erhöhen. Fahrdynamikregelungen werden zur Kontrolle und Begrenzung von Gierbewegungen des Fahrzeuges um dessen Hochachse eingesetzt. Sensoren erfassen vom Fahrer vorgegebene Größen wie zum Beispiel den Lenkwinkel, die Gaspedalstellung und den Bremsdruck. Darüber hinaus werden die Querbeschleunigung sowie das Drehverhalten der einzelnen Fahrzeugräder gemessen. Die Leistungsfähigkeit von Fahrdynamikregelungen könnte durch das Erfassen weiterer Größen, die das dynamische Verhalten des Kraftfahrzeuges beeinflussen noch weiter gesteigert werden. Zu diesen Größen gehört beispielsweise der Reibwert der Fahrzeugräder auf der Fahrbahn oder der Schwimmwinkel, der die Winkelabweichung des Geschwindigkeitsvektors von der Fahrzeugmittellinie angibt.
Aus der DE 103 32 023 A1 ist ein Verfahren zum Bestimmen eines Lenkmoments für eine Lenkung eines Fahrzeugs bekannt. Dabei sieht das vorbekannte Verfahren vor, ein Lenkmoment für die Lenkung zu bestimmen, um bei der Konstruktion einer Lenkung größere Freiheiten zu haben.

**Zusammenfassung der Erfindung**

Hiervon ausgehend ist es eine Aufgabe der vorliegenden Erfindung ein Verfahren anzugeben, mit welchem wenigstens eine weitere Größe ermittelbar ist, die das dynamische Verhalten eines Fahrzeuges beeinflusst.
Diese Aufgabe wird durch ein Verfahren nach Anspruch 1 gelöst. Erfindungsgemäß wird ein Verfahren zur Berechnung der Seitenkraft in einem Kraftfahrzeug mit einem elektromechanischen oder elektrohydraulischen Lenksystem vorgeschlagen. Das Verfahren umfasst die folgenden Schritte:

- Berechnen einer Lenkstangenkraft unter Berücksichtigung einer lenkwinkelabhängigen Lenkübersetzung;
- Berechnen eines gesamten Rückstellmomentes aus der Lenkstangenkraft, wobei das Rückstellmoment ein durch Seitenkraft verursachtes Rückstellmoment sowie weitere Rückstellmomente umfasst;
- Quantitatives Bestimmen der weiteren Rückstellmomente auf Grundlage von Messwerten;
- Subtrahieren der weiteren Rückstellmomente von dem gesamten Rückstellmoment zur Bestimmung des durch die Seitenkraft verursachten Rückstellmomentes; und
- Ermitteln der Seitenkraft aus dem durch die Seitenkraft verursachten Rückstellmoment.

Für viele Fahrdynamikregelsysteme ist die Seitenkraft an den Rädern eine vorteilhafte Eingangsgröße. Die Seitenkraft kann z. B. für die Bestimmung des Reibwertes oder die Schätzung des Schwimmwinkels verwendet werden.
Moderne elektromechanisch oder elektrohydraulisch unterstützte Lenksysteme bzw. vom Fahrer mechanisch entkoppelte elektromechanische oder elektrohydraulische Lenksysteme enthalten prinzipbedingt Kraft- oder Momentensensorik aus denen die Lenkstangenkraft (Zahnstange bei Zahnstangenlenkung) oder Spurstangenkräfte gemessen oder berechnet. Aus den genannten Kräften können die Reifenseitenkräfte bestimmt werden. Das erfindungsgemäße Verfahren nutzt diese Sensorik um die Reifenseitenkräfte zu bestimmen.
Bei einer Weiterbildung der Erfindung fließt in die Ermittlung der Seitenkraft ein Übersetzungsverhältnis zwischen der Lenkstangenkraft und dem gesamten Rückstellmoment ein. Zweckmäßigerweise kann das Übersetzungsverhältnis lenkwinkelabhängig sein.
Vorteilhafterweise geht in die Ermittlung der Seitenkraft ein Spreizungswinkel und/oder ein Nachlaufwinkel ein.
Die für die Erfindung wichtigen weiteren Rückstellmomente können durch Rollwiderstand, Bremskraft, Antriebskraft und/oder Hochkraft verursachte Rückstellmomente umfassen.
Bei unterschiedlichen Ausführungsformen des erfindungsgemäßen Verfahrens kann die Lenkstangenkraft als auf die linke und rechte Spurstange wirkende Kraft oder als gesamte Lenkstangenkraft erfasst werden.
Vorteilhafterweise wird die gesamte Lenkstangenkraft aus einem vom Fahrer aufgebrachten Lenkmoment, einer Lenkverstärkung und einer Lenkübersetzung berechnet.
Bei einem Ausführungsbeispiel der Erfindung wird die gesamte Lenkstangenkraft aus dem Motorstrom und/oder der Motorposition eines oder mehrerer Elektromotoren des elektromechanischen oder elektrohydraulischen Lenksystems ermittelt.

Das erfindungsgemäße Verfahren kann zweckmäßig so erweitert werden, dass aus der ermittelten Seitenkraft ein Schwuimmwinkel und/oder ein Reibwert ermittelt wird.

**Kurze Beschreibung der Zeichnung:**

In der Zeichnung ist ein elektromechanisches Lenksystem schematisch dargestellt, in welchem ein Verfahren gemäß der Erfindung anwendbar ist. Es zeigen:

Fig. 1    eine schematische Darstellung eines elektromechani- schen Lenksystems;

Fig. 2    den Nachlauf- und Spreizungswinkel an einem Fahrzeug- rad;

Fig. 3    den Seitenkrafthebelarm an einem Fahrzeugrad;

Fig. 4    den Bremskrafthebelarm an einem Fahrzeugrad;

Fig. 5    den Störkrafthebelarm an einem Fahrzeugrad;

Fig. 6    den Hochkrafthebelarm an einem Fahrzeugrad und dessen Zusammenhang mit dem Spreizungswinkel; und

Fig. 7    den Hochkrafthebelarm an einem Fahrzeugrad und dessen Zusammenhang mit dem Nachlaufwinkel.

**Ausführliche Beschreibung eines Ausführungsbeispiels der Erfindung:**

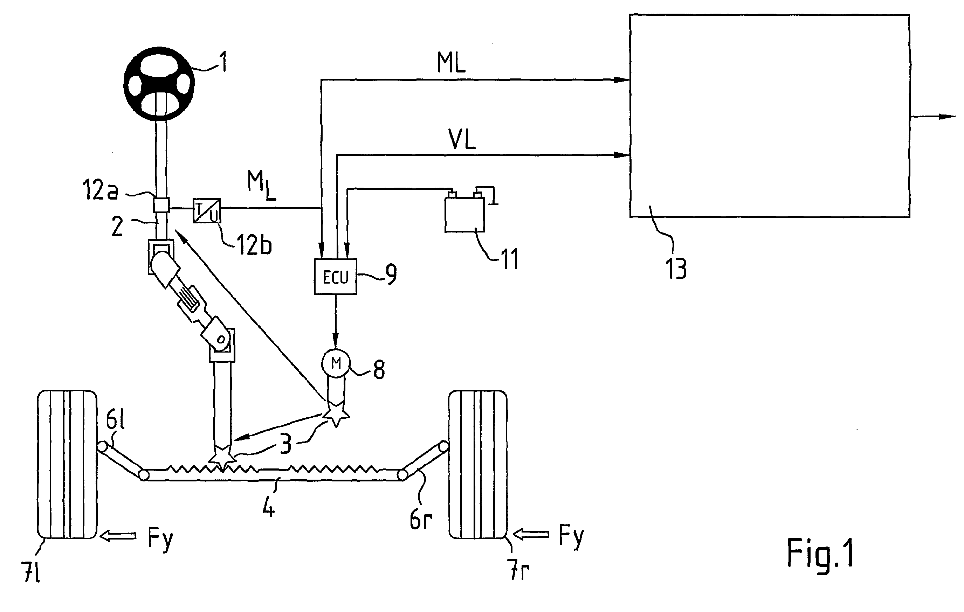

In Fig. 1 ist schematisch die Vorderachse eines Kraftfahrzeuges und das Lenksystem dargestellt. Ein Fahrer dirigiert das
Fahrzeug durch Drehen eines Lenkrades 1 in eine gewünschte Fahrtrichtung. Die Lenkbewegung des Lenkrades 1 wird über eine Lenksäule 2 mechanisch auf ein Ritzel 3 übertragen. Das Ritzel 3 greift in eine Zahnstange 4 ein. Eine Drehbewegung des Lenkrades 1 führt somit zu einer Hin- und Herbewegung der Zahnstange 4. Die Zahnstange 4 ist an beiden Enden mit jeweils einer linken und rechten Spurstange 6l, 6r verbunden, die die Bewegung der Zahnstange 4 auf Fahrzeugvorderräder 7l bzw. 7r übertragen. Die Aufhängung der Fahrzeugvorderräder 7l, 7r ist der Übersichtlichkeit halber in Fig. 1 weggelassen. Das insoweit beschriebene Lenksystem ist rein mechanisch und erfordert bei hohen Fahrzeuggewichten hohe Lenkkräfte vom Fahrer. Aus diesem Grund ist die Lenksäule 2 zusätzlich antriebsmäßig mit einem Elektromotor 8 gekoppelt, der die Lenkbewegungen des Fahrers am Lenkrad 1 unterstützt. Der Motor 8 ist in Fig. 1 zwar neben der Lenksäule 2 dargestellt, treibt in Wirklichkeit jedoch die Lenksäule 2 an und wirkt auf das Ritzel 3. Der Motor 8 wird durch eine Motorsteuerung 9 gesteuert und aus einer Batterie 11 mit Energie versorgt. Die Lenksäule 2 ist weiterhin mit einem Drehmomentsensor 12a und ein Messwertwandler 12b ausgerüstet, der die Größe des vom Fahrer aufgebrachten Lenkmomentes $M_L$ erfasst und an die Motorsteuerung 9 sowie an eine Seitenkraftberechnungseinheit 13 abgibt. Weiterhin gibt die Motorsteuereinheit 9 ein Signal $V_L$ an die Seitenkraftberechnungseinheit 13 ab. Das Signal $V_L$ beschreibt die Verstärkung des vom Fahrer aufgebrachten Lenkmomentes $M_L$. Die Seitenkraftberechnungseinheit 13 gibt ein Ausgangssignal ab, welches die auf die Vorderräder 7l, 7r einwirkende Seitenkraft $F_Y$ repräsentiert.
Die Funktionsweise des insoweit beschriebenen Lenksystems und das Verfahren zur Berechnung der Seitenkraft $F_Y$ werden im Folgenden beschrieben.

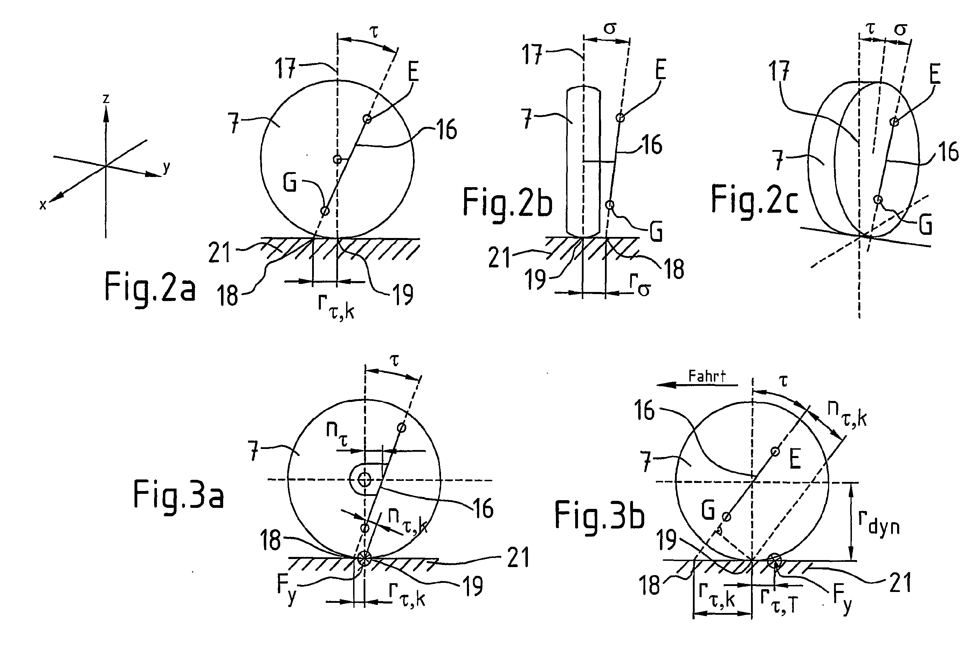

In den Figuren 2a bis 2c sind zum besseren Verständnis der Erfindung Kennwerte der Vorderradaufhängung graphisch erläutert. Der Übersichtlichkeit halber werden die Kennwerte nur am Beispiel des rechten Vorderrades eines Fahrzeuges veranschaulicht, das mit dem Bezugszeichen 7 bezeichnet ist. Bei Lenkbewegungen schwenken die Räder um je eine fahrzeugfeste Drehachse, die als Lenkachse 16 bezeichnet wird. Die Lenkachse 16 ist an zwei Punkten E und G fest mit dem Fahrzeugaufbau verbunden. Die Lage der Lenkachse 16 relativ zu einem mit dem Fahrzeugaufbau fest verbundenen Koordinatensystem X, Y, Z wird durch folgende Kennwerte beschrieben.
Fig. 2a zeigt das Rad 7 in einer Seitenansicht. Der Winkel zwischen der Lenkachse 16 und der Fahrbahnnormalen 17 in der Fahrzeuglängsebene wird als Nachlaufwinkel $\tau$ bezeichnet. Der Abstand zwischen dem Durchstoßpunkt 18 der Lenkachse 16 durch die Fahrbahn 21 und einem idealen Radaufstandspunkt 19 in der Fahrzeuglängsebene wird als Nachlaufstrecke $r_{\tau,k}$ bezeichnet.
Fig. 2b zeigt das Rad 7 in einer Ansicht von vorne. Der Winkel zwischen der Lenkachse 16 und der Fahrbahnnormalen 17 in der Fahrzeugquerebene wird als Spreizungswinkel $\sigma$ bezeichnet. Der Abstand zwischen dem Durchstoßpunkt 18 der Lenkachse 16 durch die Fahrbahn 21 und dem idealen Radaufstandspunkt 19 in der Fahrzeugquerebene wird als Lenkrollradius $r_\sigma$ bezeichnet.
Schließlich ist in Fig. 2c das Rad 7 in einer Ansicht schräg von vorne gezeigt, in der sowohl der Nachlaufwinkel

$\tau$ als auch der Spreizungswinkel $\sigma$ dargestellt sind.

In elektromechanisch oder elektrohydraulisch unterstützenden Lenksystemen wird das vom Fahrer aufgebrachte Lenkmoment $M_L$ gemessen, um die vom Elektromotor aufzubringende Verstärkung $V_L$ zu berechnen und einzustellen. Mit der in der Regel lenkwinkelabhängigen Übersetzung $i_{L1}(\delta)$ zwischen Lenkradmoment und der Summenlenkstangenkraft $F_{L,sum}$ sowie der Lenkverstärkung $V_L$ berechnet sich die Summenlenkstangenkraft wie folgt

$$F_{L,sum} = M_L \cdot V_L \cdot i_{L1}(\delta) \qquad (1).$$

Die Summenlenkstangenkraft $F_{L,sum}$ resultiert aus der Addition der von der rechten und der linken Spurstange senkrecht auf die Lenkstange wirkenden Kräfte $F_{Lr}$ und $F_{L1}$.

In vom Fahrer mechanisch entkoppelten elektromechanischen oder elektrohydraulischen Lenkungen werden entweder beide Spurstangenkräfte einzeln ($F_{L,r}$ und $F_{L,1}$) oder ebenfalls die Summenspurstangenkraft $F_{L,sum}$ gemessen oder aus dem Motorstrom und/oder der Motorposition des bzw. der Elektromotoren geschätzt. Diese Kräfte werden z. B. für die Generierung des haptischen Lenkgefühls benötigt.

Die Vorgehensweise zur Berechnung der Einzellenkstangenkräfte $F_{L,r}$ und $F_{L,1}$ ist bis auf die Parameter und Kraftwirkrichtungen identisch und wird daher im Folgenden am Beispiel eines Rades 7 ohne Radindizes durchgeführt. Die Lenkstangenkraft $F_L$ kompensiert Rückstellmomente, die auf das Rad 7 einwirken und durch unterschiedliche Kräfte erzeugt werden. Die Summe der Rückstellmomente wird mit $M_Z$ bezeichnet, weil das gesamte Rückstellmoment um die z-Achse des in Fig. 2 dargestellten Koordinatensystems wirkt.

Zwischen der Lenkstangenkraft $F_L$ und dem gesamten Rückstellmoment $M_Z$ um die Lenkachse 16 wirkt eine zweite, ebenfalls lenkwinkelabhängige Übersetzung $i_{L2}(\delta)$:

$$M_Z = F_L \cdot i_{L2}(\delta) \qquad (2).$$

In dem gesamten Rückstellmoment ist auch ein von einer Seitenkraft $F_Y$ erzeugtes Rückstellmoment enthalten. Der Zusammenhang zwischen der Seitenkraft $F_Y$ und dem von ihr erzeugten Rückstellmoment wird nachfolgend erläutert.

In Fig. 3a ist das Fahrzeugrad 7 wieder in einer Ansicht von der Seite dargestellt. Eine Seitenkraft $F_Y$ greift an dem Rad 7 an dem Radaufstandpunkt an. Da die Lenkachse 16 gegenüber der Senkrechten um den Nachlaufwinkel $\tau$ gekippt ist, greift die Seitenkraft $F_Y$ gegenüber der Lenkachse 16 versetzt an. Der Abstand zwischen dem Angriffspunkt der Seitenkraft $F_Y$, der dem Radaufstandspunkt entspricht, und der Lenkachse 16 wird als kinematische Seitenkrafthebelarm $n_{\tau,k}$ bezeichnet. Die Seitenkraft $F_Y$, die an dem Seitenkrafthebelarm $n_{\tau,k}$ angreift, erzeugt ein Rückstelldrehmoment $M_{z,y}$ gemäß:

$$M_{z,y} = F_Y \cdot n_{\tau,k} \qquad (3).$$

Diese Betrachtung gilt nur für den Fall ohne Fahrzeugbewegung und ohne Schräglauf des Rades 7.

Durch Schräglauf wandert der Angriffspunkt der Seitenkraft $F_Y$ um den Reifennachlauf hinter die Radmitte, wodurch sich der Seitenkrafthebelarm verlängert. Der Seitenkrafthebelarm verlängert sich zusätzlich zu dem kinematischen Seitenkrafthebelarm $n_{\tau,k}$ um die zur Lenkachse senkrechte Komponente Reifennachlaufs $r_{\tau,T}$, so dass für den gesamten Seitenkrafthebelarm $r_{\sigma,t}$ gilt:

$$r_{\sigma,t} = n_{\tau,k} + r_{\tau,T} \cdot \cos\tau \qquad (4).$$

In das Rückstellmoment $M_Z$ geht die gesuchte Seitenkraft $F_Y$ über den Seitenkrafthebelarm $r_{\sigma,t}$ und die kinematische Spreizung $\sigma$ ein. Das durch die Seitenkraft $F_Y$ erzeugte Rückstellmoment wird mit $M_{z,Y}$ bezeichnet:

$$M_{z,Y} = F_Y \cdot \cos\sigma \cdot r_{\sigma,t} \qquad (5).$$

Durch Einsetzen der Gleichung (4) in Gleichung (5) folgt für das Rückstellmoment $M_{z,Y}$:

$$M_{z,Y} = F_Y \cdot \cos \sigma \cdot (n_{\tau,k} + r_{\tau,T} \cdot \cos \tau) \qquad (6).$$

Neben der Seitenkraft $F_Y$ wirken weitere Kräfte momentenbildend auf die Lenkachse. Um diese Momente von dem durch die Seitenkraft erzeugten Moment $M_{z,Y}$ separieren zu können, werden im Folgenden die einzelnen Berechnungsformeln angegeben.

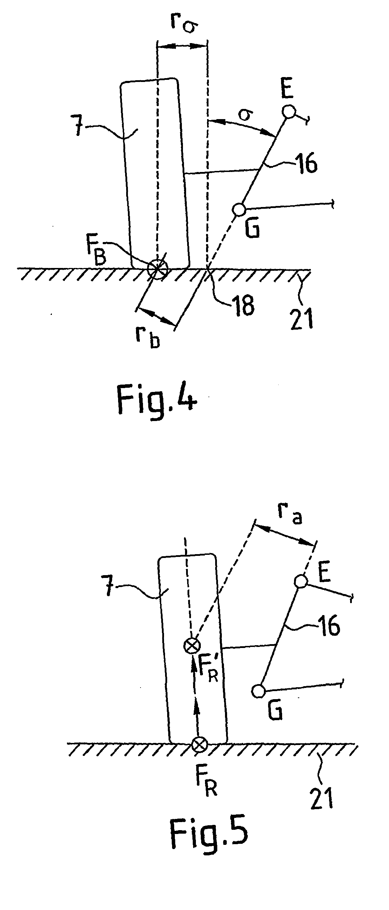

Zu den weiteren Kräften, die sich momentenbildend auf die Lenkachse 16 auswirken, gehört eine Bremskraft $F_B$, die von einer Fahrbahn 21 auf ein Rad 7 übertragen wird. In Fig. 4 ist das Fahrzeugvorderrad 7 in einer Ansicht von vorn dargestellt. Die von der Fahrbahn 21 auf das Rad 7 übertragene Bremskraft $F_B$ greift in einem Abstand $r_\sigma$ von dem Durchstoßpunkt 18 der Lenkachse 16 durch die Fahrbahn 21 an. Die Länge des zu der Lenkachse 16 senkrechten Bremskrafthebelarmes $r_b$ beträgt

$$r_b = r_\sigma \cdot \cos \sigma \qquad (7),$$

wobei $\sigma$ den Spreizungswinkel angibt. Unter Berücksichtigung des Nachlaufwinkels $\tau$ ergibt sich von der Bremskraft $F_B$ erzeugte Moment um die Lenkachse 16 zu

$$M_{z,B} = F_B \cdot \cos \tau \cdot r_b \qquad (8).$$

Das durch die Bremskraft erzeugte Rückstellmoment $M_{z,B}$ ergibt sich somit zu:

$$M_{z,B} = F_B \cdot \cos \tau \cdot r_\sigma \cdot \cos \sigma \qquad (9)$$

Diese Berechnung gilt nur für Fahrzeuge mit außenliegender Bremse. Für Fahrzeuge mit innenliegender Bremse ist an Stelle des Bremskrafthebelarmes $r_b$ ein Störkrafthebelarm $r_a$ zu verwenden, der im nächsten Abschnitt eingeführt wird.

Wie in Fig. 5 gezeigt ist, wirkt im Gegensatz zur Bremskraft die Rollwiderstands- und Antriebskraft nicht über den Bremskrafthebelarm $r_b$ sondern über den bereits erwähnten Störkrafthebelarm momentenbildend auf die Lenkachse 16. Die unterschiedlichen Wirkhebel kommen zustande, weil für Antriebskraft und Rollwiderstandskraft $F_R$ kein Moment sondern nur eine Kraft zwischen Rad und Radträger übertragen wird. Bei Freischneiden in Radmitte ist $F_R' = F_R$ (siehe Fig. 5). Damit ergibt sich das durch die Rollwiderstandskraft $F_R$ verursachte Rückstellmoment $M_{z,R}$ zu:

$$M_{z,R} = F_R \cdot \cos \tau \cdot r_a \qquad (10).$$

Hierbei ist $r_a$ der senkrecht auf der Lenkachse 16 stehende Störkrafthebelarm, und $\cos \tau$ berücksichtigt die Kräfteaufteilung aufgrund des Nachlaufwinkels $\tau$. Die Rollwiderstandskraft $F_R$ kann aus der Hochkraft $F_Z$ und dem Rollwiderstandsbeiwert gewonnen werden.

Eine Antriebskraft $F_A$ erzeugt ebenfalls über den Störkrafthebelarm $r_a$ ein Moment $M_A$ um die Lenkachse 16 gemäß

$$M_{z,A} = F_A \cdot \cos \tau \cdot r_a \qquad (11).$$

Weiterhin erzeugt eine Hochkraft $F_Z$ ein Rückstellmoment, das insbesondere bei kleineren Geschwindigkeiten von Bedeutung ist, wenn nur kleine Seitenkräfte auftreten.

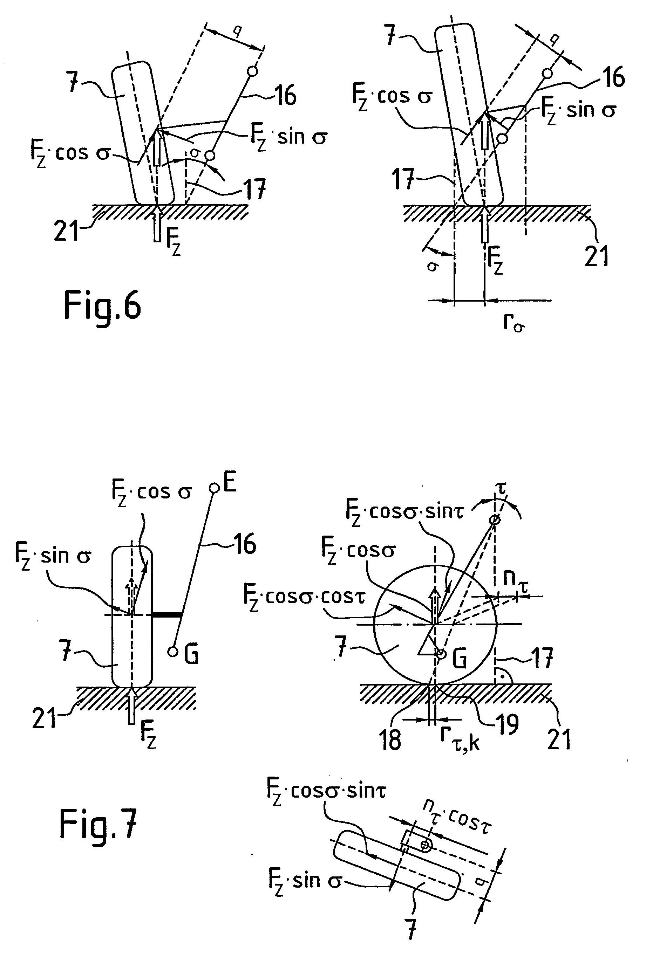

Aufgrund der Spreizung $\sigma$ wirkt die mit $\cos \tau$ skalierte Hochkraft $F_Z$ abhängig vom Lenkwinkel $\delta$ mit dem Hochkrafthebelarm q als Rückstellmoment wie in Fig. 6 gezeigt ist:

$$M_{Z,Z1} = F_Z \cdot \cos \tau \cdot \sin \sigma \cdot \sin \delta \cdot q \qquad (12)$$

Der Hochkrafthebelarm oder auch Lenkhebelarm q berechnet sich aus dem Reifenradius $r_{dyn}$, dem Lenkroll-radius $r_\sigma$ (Fig. 2b und 4) und dem Spreizungswinkel $\sigma$ wie folgt:

$$q = (r_\sigma + r_{dyn} \cdot \tan \sigma) \cdot \cos \sigma \qquad (13)$$

Das Rückstellmoment berechnet sich mit dem Hochkrafthebelarm zu:

$$M_{Z,Z1} = F_Z \cdot \cos \tau \cdot \sin \sigma \cdot \sin \delta \cdot (r_\sigma + r_{dyn} \cdot \tan \sigma) \cdot \cos \sigma \qquad (14)$$

Die beschriebenen geometrischen Verhältnisse sind in Fig. 6 dargestellt.
Zusätzlich zu dem durch die Spreizung hervorgerufenen Moment erzeugt die Hochkraft $F_Z$ aufgrund des Nach-laufs $\tau$ ein weiteres Rückstellmoment $M_{Z,Z2}$:

$$M_{Z,Z2} = F_Z \cdot \sin \sigma \cdot \cos \tau \; \sin \delta \cdot n_\tau \qquad (15),$$

wobei der Nachlaufversatz $n_\tau$ den Abstand zwischen dem Angriffspunkt der Hochkraft $F_Z$ und dem Befestigungspunkt am Fahrzeug angibt. Die geometrischen Verhältnisse sind für diese Situation in Fig. 7 dargestellt.
Die gesuchte Seitenkraft $F_Y$ berechnet sich aus dem über die Lenkstangenkraft $F_L$ ermittelten Gesamtrückstellmoment $M_Z$ wie folgt. Es gilt, dass das gesamte Rückstellmoment $M_Z$ die Summe der einzelnen Rückstellmomente ist:

$$M_Z = M_{Z,Y} + M_{Z,B} + M_{Z,R} + M_{Z,A} + M_{Z,Z1} + M_{Z,Z2} \qquad (16)$$

Für das Seitenkraftmoment $M_{Z,Y}$ gilt Gleichung (6). Durch Einsetzen von Gleichung (6) in Gleichung (16) und Umstellen ergibt sich

$$F_Y = (M_Z - M_{Z,B} - M_{Z,R} - M_{Z,A} - M_{Z,Z1} - M_{Z,Z2}) / (\cos \sigma \cdot (n_{\tau,k} + r_{\tau T} \cdot \cos \tau)) \qquad (17).$$

Aus dieser Gleichung folgt, dass folgende Parameter bestimmt werden müssen, um die Seitenkraft $F_Y$ zu ermitteln:

$\sigma$:     Spreizungswinkel
$\tau$:     Nachlaufwinkel
$\delta$:     Lenkwinkel
$r_\sigma$:     Lenkrollradius
$n_\tau$:     Nachlaufversatz
$r_{dyn}$:     Reifenradius
$r_a$:     Störkrafthebelarm
$n_{\tau,k}$:     kinematischer Seitenkrafthebelarm
$r_{\tau,T}$:     Reifennachlauf

Mittels der für herkömmliche Fahrdynamikregelungen bereits vorhandenen Sensoren werden neben dem bereits erwähnten Lenkmoment $M_L$, der Lenkstangenkraft $F_L$, der Lenkverstärkung $V_L$ und der Übersetzungsverhältnisse $i_{L1}$, $i_{L2}$ außerdem folgende Größen gemessen:

$F_B$:     Bremskraft
$F_A$:     Antriebskraft
$F_Z$:     Hochkraft

Die Gesamtheit der Parameter und Messgrößen gestattet es schließlich, die Seitenkraft $F_Y$ gemäß Gleichung (17) zu ermitteln wie es oben beschrieben worden ist.
Die Erfindung ist zwar am Beispiel eines elektromechanischen Lenksystems beschrieben worden, aber sie ist in ganz entsprechender Weise auch auf elektrohydraulische Lenksysteme anwendbar.

**Patentansprüche**

1.  Verfahren zur Berechnung der Seitenkraft in einem Kraftfahrzeug mit einem elektromechanischen oder elektrohydraulischen Lenksystem, wobei das Verfahren die folgenden Schritte umfasst:

    - Berechnen einer Lenkstangenkraft ($F_L$) unter Berücksichtigung einer lenkwinkelabhängigen Lenkübersetzung ($i_{L1}(\delta)$;
    - Berechnen eines gesamten Rückstellmomentes ($M_Z$) aus der Lenkstangenkraft, wobei das Rückstellmoment ein durch Seitenkraft ($F_Y$) verursachtes Rückstellmoment ($M_{Z,Y}$) sowie weitere Rückstellmomente ($M_{Z,B}$, $M_{Z,R}$, $M_{Z,A}$, $M_{Z,Z1}$, $M_{Z,Z2}$) umfasst;
    - Quantitatives Bestimmen der weiteren Rückstellmomente auf Grundlage von Messwerten;
    - Subtrahieren der weiteren Rückstellmomente von dem gesamten Rückstellmoment zur Bestimmung des durch die Seitenkraft verursachten Rückstellmomentes; und
    - Ermitteln der Seitenkraft ($F_Y$) aus dem durch die Seitenkraft verursachten Rückstellmoment ($M_{Z,Y}$).

2.  Verfahren nach Anspruch 1, **dadurch gekennzeichnet, dass** in die Ermittlung der Seitenkraft ein Übersetzungsverhältnis ($i_{L2}$) zwischen der Lenkstangenkraft ($F_L$) und dem gesamten Rückstellmoment ($M_Z$) einfließt.

3.  Verfahren nach Anspruch 2, **dadurch gekennzeichnet, dass** das Übersetzungsverhältnis ($i_{L2}(\delta)$) lenkwinkelabhängig ist.

4.  Verfahren nach Anspruch 1, **dadurch gekennzeichnet, dass** in die Ermittlung der Seitenkraft ($F_Y$) ein Spreizungswinkel ($\sigma$) und/oder ein Nachlaufwinkel ($\tau$) eingeht.

5.  Verfahren nach Anspruch 1, **dadurch gekennzeichnet, dass** die weiteren Rückstellmomente ein durch Rollwiderstand ($F_R$), Bremskraft ($F_B$), Antriebskraft ($F_A$) und/oder durch Hochkraft verursachtes Rückstellmoment ($M_{Z,R}$, $M_{Z,B}$, $M_{Z,A}$, $M_{Z,Z1}$, $M_{Z,Z2}$) umfassen.

6.  Verfahren nach Anspruch 1, **dadurch gekennzeichnet, dass** die Lenkstangenkraft als auf die linke und rechte Spurstange wirkende Kraft oder als gesamte Lenkstangenkraft ($F_L$) erfasst wird.

7.  Verfahren nach Anspruch 1, **dadurch gekennzeichnet, dass** die gesamte Lenkstangenkraft ($F_L$) aus einem vom Fahrer aufgebrachten Lenkmoment ($M_L$), einer Lenkverstärkung ($V_L$) und einer Lenkübersetzung ($i_{L1}$) berechnet wird.

8.  Verfahren nach Anspruch 1, **dadurch gekennzeichnet, dass** die gesamte Lenkstangenkraft aus dem Motorstrom und/oder der Motorposition eines oder mehrerer Elektromotoren (8) des elektromechanischen oder elektrohydraulischen Lenksystems ermittelt wird.

9.  Verfahren nach Anspruch 1, **dadurch gekennzeichnet, dass** aus der ermittelten Seitenkraft ($F_Y$) ein Schwimmwinkel ermittelt wird.

10. Verfahren nach Anspruch 1, **dadurch gekennzeichnet, dass** aus der ermittelten Seitenkraft ($F_Y$) ein Reibwert ermittelt wird.

**Claims**

1. Method for calculating the lateral force in a motor vehicle with an electromechanical or electrohydraulic steering system, wherein the method comprises the following steps:

   - calculating a steering rod force ($F_L$) taking a steering ratio ($i_{L1}(\delta)$) which is dependent on the steering angle under consideration;
   - calculating a total restoring torque ($M_Z$) from the steering rod force, wherein the restoring torque comprises a restoring torque ($M_{Z,Y}$) caused by lateral force ($F_Y$) and other restoring torques ($M_{Z,B}$, $M_{Z,R}$, $M_{Z,A}$, $M_{Z,Z1}$, $M_{Z,Z2}$);
   - quantitatively determining the other restoring torques on the basis of measured values;
   - subtracting the other restoring torques from the total restoring torque in order to determine the restoring torque caused by the lateral force; and
   - ascertaining the lateral force ($F_Y$) from the restoring torque ($M_{Z,Y}$) caused by the lateral force.

2. Method according to Claim 1, **characterized in that** a transmission ratio ($i_{L2}$) of the steering rod force ($F_L$) to the total restoring torque ($M_Z$) is included in the ascertaining of the lateral force.

3. Method according to Claim 2, **characterized in that** the transmission ratio ($i_{L2}(\delta)$) is dependent on the steering angle.

4. Method according to Claim 1, **characterized in that** a steering axle inclination angle ($\sigma$) and/or a castor angle ($\tau$) are included in the ascertaining of the lateral force ($F_Y$).

5. Method according to Claim 1, **characterized in that** the other restoring torques comprise a restoring torque ($M_{Z,R}$, $M_{Z,B}$, $M_{Z,A}$, $M_{Z,Z1}$, $M_{Z,Z2}$) caused by rolling resistance ($F_R$), brake force ($F_B$), driving force ($F_A$) and/or by vertical force.

6. Method according to Claim 1, **characterized in that** the steering rod force is recorded as a force acting on the left and right track rods or as a total steering rod force ($F_L$).

7. Method according to Claim 1, **characterized in that** the total steering rod force ($F_L$) is calculated from a steering torque ($M_L$) applied by the driver, a steering amplification ($V_L$) and a steering ratio ($i_{L1}$).

8. Method according to Claim 1, **characterized in that** the total steering rod force is ascertained from the motor power and/or the motor position of one or more electric motors (8) of the electromechanical or electrohydraulic steering system.

9. Method according to Claim 1, **characterized in that** a floating angle is ascertained from the lateral force ($F_Y$) ascertained.

10. Method according to Claim 1, **characterized in that** a frictional value is ascertained from the lateral force ($F_Y$) ascertained.


**Revendications**

1. Procédé de calcul de la force latérale dans un véhicule automobile doté d'un système électromécanique ou électrohydraulique d'assistance à la direction, le procédé comprenant les étapes suivantes :

   - calculer la force ($F_L$) exercée sur la colonne de direction en tenant compte d'un taux de conversion de direction ($i_{L1}(\delta)$) qui dépend de l'angle de direction,
   - calculer le couple de rappel global ($M_Z$) à partir de la force exercée sur la colonne de direction, le couple de rappel comprenant un couple de rappel ($M_{Z,Y}$) provoqué par la force latérale (($F_Y$) ainsi que d'autres couples de rappel ($M_{Z,B}$, $M_{Z,R}$, $M_{Z,A}$, $M_{Z,Z1}$, $M_{Z,Z2}$),
   - déterminer quantitativement les autres couples de rappel sur base de valeurs de mesure,
   - soustraire les autres couples de rappel du couple de rappel global pour déterminer le couple de rappel provoqué par la force latérale et
   - déterminer la force latérale ($F_Y$) à partir du couple de rappel ($M_{Z,Y}$) provoqué par la force latérale.

2. Procédé selon la revendication 1, **caractérisé en ce que** le taux de conversion ($i_{L2}$) entre la force ($F_L$) exercée sur la colonne de direction et le couple global de rappel ($M_Z$) intervient dans la détermination de la force latérale.

3. Procédé selon la revendication 2, **caractérisé en ce que** le taux de conversion ($I_{L2}(\delta)$) dépend de l'angle de direction.

4. Procédé selon la revendication 1, **caractérisé en ce qu'**un angle d'étalement ($\sigma$) et/ou un angle d'inertie ($\tau$) interviennent dans la détermination de la force latérale (Fy) .

5. Procédé selon la revendication 1, **caractérisé en ce que** les autres couples de rappel comprennent les couples de rappel ($M_{Z,R}$, $M_{Z,B}$, $M_{Z,A}$, $M_{Z,Z1}$, $M_{Z,Z2}$) provoqués par la résistance de roulement ($F_R$), la force de freinage ($F_B$), la force d'entraînement ($F_A$) et/ou une force verticale.

6. Procédé selon la revendication 1, **caractérisé en ce que** la force agissant sur la colonne de direction est détectée comme étant la force agissant sur la barre d'accouplement gauche et la force agissant sur la barre d'accouplement droite ou comme étant la force globale ($F_L$) agissant sur la colonne de direction.

7. Procédé selon la revendication 1, **caractérisé en ce que** la force globale ($F_L$) agissant sur la colonne de direction est calculée à partir du couple de direction ($M_L$) appliqué par le conducteur, de l'amplificateur de direction ($V_L$) et du taux de conversion d'angle de direction ($i_{L1}$).

8. Procédé selon la revendication 1, **caractérisé en ce que** la force totale agissant sur la colonne de direction est déterminée à partir du courant du moteur et/ou de la position d'un ou plusieurs moteurs électriques (8) du système électromécanique ou électrohydraulique d'assistance à la direction.

9. Procédé selon la revendication 1, **caractérisé en ce qu'**un angle de flottement est déterminé à partir de la force latérale ($F_Y$) ainsi déterminée.

10. Procédé selon la revendication 1, **caractérisé en ce qu'**une valeur du frottement est déterminée à partir de la force latérale ($F_Y$) ainsi déterminée.

Fig.1

Fig.2a

Fig.2b

Fig.2c

Fig.3a

Fig.3b

EP 1 727 725 B1

Fig.4

Fig.5

Fig.6

Fig.7

**EP 1 727 725 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10332023 A1